(19) Europäisches Patentamt
European Patent Office
Office européen des brevets

(11) **EP 3 927 448 B1**

(12) **EUROPÄISCHE PATENTSCHRIFT**

(45) Veröffentlichungstag und Bekanntmachung des Hinweises auf die Patenterteilung:
**05.04.2023  Patentblatt 2023/14**

(21) Anmeldenummer: **20706212.6**

(22) Anmeldetag: **18.02.2020**

(51) Internationale Patentklassifikation (IPC):
**B01D 39/16** (2006.01)    **B01D 39/20** (2006.01)

(52) Gemeinsame Patentklassifikation (CPC):
**B01D 39/1623; B01D 39/2058; B01D 39/2068;**
B01D 2239/0407; B01D 2239/0464; B01D 2239/065

(86) Internationale Anmeldenummer:
**PCT/EP2020/054222**

(87) Internationale Veröffentlichungsnummer:
**WO 2020/169594 (27.08.2020 Gazette 2020/35)**

(54) **FILTERMEDIUM ZUR ABSCHEIDUNG VON STICKOXIDEN**

FILTER MEDIUM FOR SEPARATING NITROGEN OXIDES

MILIEU FILTRANT SERVANT À LA SÉPARATION D'OXYDES D'AZOTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.02.2019  DE 102019104148**

(43) Veröffentlichungstag der Anmeldung:
**29.12.2021  Patentblatt 2021/52**

(73) Patentinhaber: **MANN+HUMMEL GmbH**
**71636 Ludwigsburg (DE)**

(72) Erfinder:
• **ZAPF, Simon**
**96052 Bamberg (DE)**
• **CHOWANIETZ, Volkmar**
**95448 Bayreuth (DE)**
• **HITZKE, Christoph**
**96250 Ebensfeld (DE)**

(74) Vertreter: **Mann + Hummel Intellectual Property**
**Mann + Hummel**
**International GmbH & Co. KG**
**Schwieberdinger Straße 126**
**71636 Ludwigsburg (DE)**

(56) Entgegenhaltungen:
**DE-A1- 2 604 994**        **DE-A1-102015 205 551**
**DE-A1-102018 114 351**    **US-A- 5 772 738**

**Beschreibung**

**Technisches Gebiet der Erfindung**

Die vorliegende Erfindung betrifft ein Filtermedium zur Abscheidung von Stickoxiden aus einem Gasgemisch wie etwa Umgebungsluft. Insbesondere betrifft die vorliegende Erfindung ein Filtermedium zur Abscheidung von Stickoxiden aus einem Gasgemisch wie etwa Umgebungsluft, wobei das Filtermedium drei Schichten umfasst, die verschiedene Adsorbentien enthalten.

**Hintergrund der Erfindung**

Weltweit besteht in vielen Ballungszentren das Problem, dass die Umgebungsluft durch Industrieabgase, den Straßenverkehr und private Feuerstätten vor allem bei widrigen Wetterlagen (wenig oder kein Niederschlag, Inversion, geringe Windgeschwindigkeiten, kein Luftaustausch zwischen Höhenschichten) Grenzwerte für Feinstaub und/oder Schadgase wie Ozon, $NO_x$, CO um ein Vielfaches überschritten werden können. Maßnahmen, die zu einer Reduktion der Schadstoffkonzentrationen führen, können entweder in der Vermeidung oder Reduzierung von Emissionen und/oder der Abscheidung dieser Schadstoffe aus der Umgebungsluft liegen. Die Vermeidung oder Reduzierung von Emissionen erfordert i.d.R. ein großflächig umgesetztes Maßnahmenkonzept und ist daher kurzfristig kaum darstellbar. Die Abscheidung der Schadstoffe aus der Umgebungsluft könnte nach individuellem Bedarf in Wohn- und Aufenthaltsräumen des täglichen Lebens und insbesondere auch in einer stark mit Schadstoffen belasteten Umgebung durch Einsatz geeigneter Filtersysteme erreicht werden. Beispielsweise könnte die Schadstoffkonzentration in der Umgebungsluft im Innenraum von Automobilen, die sich in Ballungsräumen zwangsläufig in einer stark mit Schadstoffen belasteten Umgebung bewegen, durch geeignete Filter vermindert werden, wobei die Abtrennung von Feinstaub und Stickoxiden von besonderem Interesse ist.

WO 17/216611 A1 beschreibt eine Vorrichtung zur Reinigung von Umgebungsluft durch Abscheidung von festen Schwebstoffen wie Staub, Sand, Pollen, Partikeln mit einem aerodynamischen Durchmesser von weniger als 10 $\mu$m oder weniger als 2,5 $\mu$m wie etwa elementarem Kohlenstoff und organischem Kohlenstoff sowie Gasen wie Kohlenwasserstoffen, Kohlenmonoxid, Stickoxiden, Schwefeloxiden und Ammoniak.

DE 10 2018 114 351 A1 beschreibt ein Filtermedium umfassend mindestens eine katalytische Aktivschicht, die katalytische Aktivkohle aufweist, eine zweite Aktivschicht, die imprägnierte oder katalytische Aktivkohlepartikel aufweist, eine dritte Aktivschicht, die die imprägnierte oder katalytische Aktivkohlepartikel aufweist, wobei mindestens eine Aktivschicht imprägnierte Aktivkohlepartikel aufweist und die drei Schichten zueinander unterschiedlich sind. Das Filtermedium adsorbiert n-Butan, flüchtige organische Kohlenstoffverbindungen, $SO_2$, $H_2S$, $NH_3$ und Formaldehyd.

US 5772738 A offenbart ein Filtermodul, das ein gefaltetes Polyestergewebe, das feine Partikel aus Aktivkohle ohne zusätzliches chemisches Absorptionsmittel enthält, ein Anionenaustauschfasergewebe und ein Aktivkohlefasergewebe mit gebundenem $ZnCl_2$ umfasst. Alternativ kann die dritte Schicht ein Aktivkohlefasergewebe sein, an das eine starke Base oder $KMnO_4$ gebunden ist.

Insbesondere, wenn die unerwünschten Bestandteile des Gasgemisches Moleküle sind, die physisorptiv in nur geringem Maße abscheidbar sind, ist es für eine hocheffiziente Abtrennung in der Regel erforderlich, diese unerwünschten molekularen Bestandteile durch Chemisorption im Filtermedium festzuhalten. Dafür sind geeignete Chemisorbentien erforderlich.

Es besteht trotz der im Stand der Technik dargestellten Forschungsarbeiten der fortwährende Bedarf, Filtermedien bereit zu stellen, die geeignet sind, unerwünschte Bestandteile, insbesondere Stickoxide, aus einem Gasgemisch, insbesondere Umgebungsluft, teilweise oder vollständig abzutrennen. Die Filtermedien sollen einerseits zu einem möglichst niedrigen Druckverlust in dem zu reinigenden Gasstrom führen. Dazu ist es in der Regel erforderlich, dass die Filtermedien die unerwünschten Bestandteile des Gasgemisches in hocheffizienter Weise aus dem Gasstrom zumindest teilweise, vorzugsweise jedoch möglichst umfassend, entfernen, damit die Filtermedien in geringen Schichtdicken eingesetzt werden können.

Andererseits sollen in den Filtermedien kostengünstige und gut handhabbare Agentien zum Einsatz kommen.

Mit der vorliegenden Erfindung wird eine Lösung zu diesem Problem bereitgestellt.

**Kurzbeschreibung der Erfindung**

Gemäß einem ersten Aspekt der Erfindung wird ein Filtermedium bereitgestellt, das die Schichten (A) bis (C) umfasst, wobei

die Schicht (A) nicht imprägnierte Aktivkohle umfasst,
die Schicht (B) ein festes Trägermaterial umfasst, das mit einem Permanganatsalz imprägniert ist, und

die Schicht (C) basisch imprägnierte Aktivkohle umfasst,

wobei

die Schichten (B) und (C) so angeordnet sind, dass ein durch das Filtermedium strömendes Gas die Schicht (B) vor der Schicht (C) durchströmt, und

die Schicht (A) so angeordnet ist, dass ein durch das Filtermedium strömendes Gas die Schicht (A) vor der Schicht (B) oder die Schicht (A) nach der Schicht (C) durchströmt.

Der Vorteil einer anströmseitig vorgesehenen nicht imprägnierten Aktivkohle in Lage A liegt in der VOC-Adsorption (aliphatische Kohlenwasserstoffe, Aromaten, Aldehyde usw.). Das erfindungsgemäße Filtermedium hat dadurch besonders vorteilhafte $NO_x$ Adsorptionseigenschaften, jedoch ist die Umgebungsluft im Anwendungsfall (z.B. Innenraumfilter für Fahrzeuge oder Umgebungsluftfiltrationsvorrichtung) auch mit Kohlenwasserstoffen kontaminiert. Die vorgelagerte nicht imprägnierte Aktivkohle gewährleistet somit die VOC-Adsorption und verhindert eine Koadsorption von VOC's und Stickoxiden in den in Strömungsrichtung nachfolgenden Schichten B und C, sodass diese beiden Schichten besonders NOx-selektiv wirken können.

Gemäß einem weiteren Aspekt der Erfindung wird ein Verfahren zur Herstellung eines Filtermediums gemäß dem ersten Aspekt der Erfindung bereitgestellt, das die folgenden Schritte umfasst:

(i) Aufbringen einer Schicht (A) umfassend Aktivkohle;

(ii) Aufbringen einer Schicht (B) umfassend ein festes Trägermaterial, das mit einem Permanganatsalz imprägniert ist;

(iii) Aufbringen einer Schicht (C) umfassend einer basisch imprägnierten Aktivkohle,

wenn die Schicht (A) so angeordnet ist, dass ein durch das Filtermedium strömendes Gas die Schicht (A) vor der Schicht (B) durchströmt;

oder umfassend die Schritte

(i) Aufbringen einer Schicht (B) umfassend ein festes Trägermaterial, das mit einem Permanganatsalz imprägniert ist;

(ii) Aufbringen einer Schicht (C) umfassend einer basisch imprägnierten Aktivkohle,

(iii) Aufbringen einer Schicht (A) umfassend Aktivkohle,

wenn die Schicht (A) so angeordnet ist, dass ein durch das Filtermedium strömendes Gas die Schicht (A) nach der Schicht (C) durchströmt;

so dass

die Schichten (B) und (C) so angeordnet sind, dass ein durch das Filtermedium strömendes Gas die Schicht (B) vor der Schicht (C) durchströmt,

die Schicht (A) so angeordnet ist, dass ein durch das Filtermedium strömendes Gas die Schicht (A) vor der Schicht (B) oder die Schicht (A) nach der Schicht (C) durchströmt.

## Figuren

Fig. 1 zeigt eine stark vereinfachte Schnittansicht eines Filtermediums gemäß einer Ausführungsform der vorliegenden Anmeldung;

Fig. 2 das Filtermedium entspricht dem in Fig. 1 gezeigten im Wesentlichen. Das Filtermedium weist zudem eine Partikelfilterlage auf.

## Detaillierte Beschreibung der Erfindung

Nachfolgend wird die Erfindung detailliert beschrieben. Im Rahmen der vorliegenden Anmeldung werden die im Folgenden aufgeführten Begriffe zur Beschreibung der Erfindung verwendet. Diese Begriffe sind dem Fachmann bekannt und werden mit den im Folgenden erläuternden Bedeutungen verwendet.

Mit dem Begriff "Stickoxide" werden im Rahmen der vorliegenden Anmeldung alle bekannten Oxide des Stickstoffs bezeichnet, insbesondere Stickstoffmonoxid (NO) und Stickstoffdioxid ($NO_2$), aber auch Distickstoffmonoxid ($N_2O$), Distickstofftrioxid ($N_2O_3$) und Distickstofftetroxid ($N_2O_4$). Diese Oxide des Stickstoffs stehen miteinander in dynamischen Gleichgewichten, d.h. bei Vorliegen eines dieser Stickoxide bilden sich in der Regel auch die anderen genannten Stickoxide, wenngleich das dynamisch Gleichgewicht in der Regel deutlich auf der Seite des Stickstoffdioxids ($NO_2$) liegt, so dass die anderen Stickoxide in vielen Fällen nur in vergleichsweise geringen Mengen vorliegen.

Der Begriff "Aktivkohle", insbesondere bezüglich der nicht imprägnierten Aktivkohle, bezeichnet im Rahmen der vorliegenden Anmeldung Kohlenstoff mit hochporöser, offenporiger Struktur. Die spezifische Oberfläche, die durch BET-Messungen, d.h. durch Gasadsorptionsmessungen, ermittelt werden kann, beträgt typischerweise 300 m$^2$/g oder mehr. Typischerweise liegt Aktivkohle in feinkörniger Form vor, insbesondere um eine größere spezifische Oberfläche bereitzustellen. Aktivkohle kann aus kohlenstoffhaltigen Rohstoffen unter Verkokung und anschließender oder gleichzeitiger Aktivierung hergestellt werden. Unter "Aktivierung" werden dabei Verfahren bezeichnet, die der Vergrößerung der Porosität und somit der inneren Oberfläche dienen, die üblicherweise in Gasaktivierung und chemische Aktivierung unterteilt werden. Bei der Gasaktivierung geht man von bereits verkoktem Material aus und setzt dieses dem oxidierenden Einfluss eines Gasstromes, wie z.B. Wasserdampf, Kohlendioxid, Luft oder deren Gemische aus. Die Aktivierungstemperatur liegt bei etwa 700-1000 C, wobei der Kohlenstoff nach der Wassergasreaktion partiell verbrannt wird und somit ein poröses hochaktives Kohlenstoffgerüst entsteht. Bei der chemischen Aktivierung mischt man zunächst meist unverkohltes, kohlenstoffhaltiges Material mit dehydratisierenden und oxidierend wirkenden Chemikalien. Anschließend wird die Mischung auf 400-800 °C erhitzt. Die Aktivierungsmittel (z.B. Zinkchlorid, Phosphorsäure oder Schwefelsäure) werden anschließend ausgewaschen und zurückgewonnen. Die Aktivierung kann generell in Drehrohr-, Etagen- Schacht-, Wirbelschichtöfen, Wirbelschicht- oder Fließbettreaktoren durchgeführt werden.

Eine imprägnierte Aktivkohle unterscheidet sich insofern, dass nach der Gasaktivierung in einem separaten Verfahrensschritt eine Chemikalie (z.B. eine Säure oder Lauge) auf die Aktivkohle aufgebracht wird.

Unter dem Begriff "Korngröße" eines teilchenförmigen Feststoffs, der beispielsweise ein imprägnierter oder nicht-imprägnierter Träger sein kann, versteht man im Rahmen dieser Anmeldung eine Teilchenfraktion, die durch Sieben aus einer Teilchenmischung mit größerer Teilchengrößenverteilung erhalten werden kann. Als "Korngröße" wird daher in der Regel ein Korngrößenbereich angegeben, dessen Ober- und Untergrenze durch die Maschenweite der Siebe einer Siebkaskade definiert wird, zwischen denen sich die bezeichnete Teilchenfraktion beim Sieben ansammelt. Beispielsweise bezeichnet die Korngröße 30-80 mesh die Teilchenfraktion, die sich beim Sieben unter einem Sieb mit 30 Maschen pro Zoll (30 mesh) auf einem Sieb mit 80 Maschen pro Zoll (80 mesh) sammelt.

Mit dem Begriff "Imprägnierungsgrad" wird im Rahmen dieser Anmeldung die Beladung eines Trägers (z.B. Aktivkohle oder Al$_2$O$_3$) mit einem Imprägnierungsmittel (z.B. einem Permanganatsalz oder einer Base wie NaOH) bezeichnet. Der Imprägnierungsgrad (Angaben in Gewichtsprozent, Gew.%) kann entsprechend der Formel

$$Impr\ddot{a}gnierungsgrad = \frac{\text{m (Imprägnierungsmittel)}}{\text{m (Träger)} + \text{m (Imprägnierungsmittel)}}$$

als Gewichtsprozentsatz berechnet werden, wobei

m (Imprägnierungsmittel) = Masse des eingesetzten Imprägnierungsmittels und
m (Träger) = Masse des eingesetzten Trägermaterials.

Unter dem Begriff "Chemisorption" wird im Rahmen dieser Anmeldung die Anlagerung von Molekülen, insbesondere aus einem Gasgemisch, an der Oberfläche eines Trägermaterials unter Ausbildung einer chemischen Bindung verstanden. Ein Molekül kann je nach seiner chemischen Beschaffenheit mindestens eine Form der chemischen Bindung eingehen, z.B. eine ionische, kovalente, oder Wasserstoffbrückenbindung, vorzugsweise eine kovalente Bindung.

Das erfindungsgemäße Filtermedium umfasst mindestens drei Schichten, die nachfolgend im Detail beschrieben werden.

Schicht (A)

Schicht (A) umfasst Aktivkohle. In einer Ausführungsform weist die Schicht (A) ein Flächengewicht von 50 bis 600 g/m$^2$ auf, insbesondere von 100 bis 500 g/m$^2$, bevorzugt 150 bis 400 g/m$^2$, mehr bevorzugt 200 bis 300 g/m$^2$. Das zu verwendende Flächengewicht kann je nach Stärke der erwünschten adsorptiven Eigenschaften der Aktivkohle (u.a. abhängig von dessen Korngröße) variiert werden.

In einer weiteren Ausführungsform weist die Schicht (A) eine Korngröße von 10 bis 80 mesh auf, bevorzugt von 30 bis 60 mesh. Die Korngröße der Aktivkohle kann durch geeignete Auswahl des Ausgangsmaterials zur Herstellung der Aktivkohle und/oder Art der Aktivierung gesteuert werden und insbesondere durch Mahlen und Sieben eingestellt werden.

In einer weiteren Ausführungsform weist die Schicht (A) eine BET-Oberfläche von 500 bis 1500 m$^2$/g auf. Die BET-Oberfläche der Aktivkohle kann durch geeignete Auswahl des Ausgangsmaterials zur Herstellung der Aktivkohle und/oder Art der Aktivierung gesteuert werden.

Flächengewicht, Korngröße und/oder BET-Oberfläche der Aktivkohle in Schicht (A) können variiert werden, um die Adsorptionskapazität der Schicht (A) einzustellen. In der Schicht (A) erfolgt eine möglichst starke Physisorption von unerwünschten molekularen Bestandteilen eines durchströmenden Gasgemisches (insbesondere von Ozon, flüchtige organische Kohlenstoffverbindungen (z.B. CO oder n-Butan), $SO_2$, $H_2S$, $NH_3$ oder Formaldehyd).

Schicht (B)

Schicht (B) umfasst ein festes Trägermaterial, das mit einem Permanganatsalz imprägniert ist. In einer Ausführungsform ist das feste Trägermaterial der Schicht (B) ausgewählt aus Aluminiumoxid ($Al_2O_3$), Kieselgel ($SiO_2$), Zirkonoxid ($ZrO_2$), Titanoxid ($TiO_2$), Zeolith, Kaolin, Ton, Bauxit und einer Kombination davon. In einer bevorzugten Ausführungsform ist das feste Trägermaterial der Schicht (B) Aluminiumoxid ($Al_2O_3$). Die Wahl eines geeigneten festen Trägermaterials kann u.a. vom Imprägnierungsmittel und dem Imprägnierungsgrad abhängen.

In einer weiteren Ausführungsform weist das feste Trägermaterial der Schicht (B) eine Korngröße von 100 bis 5000 $\mu$m auf. In einer weiteren Ausführungsform weist das Trägermaterial eine Korngröße zwischen 200 bis 3000 $\mu$m, bevorzugt 300-2000 $\mu$m, mehr bevorzugt 250-1000 $\mu$m, besonders bevorzugt 350-800 $\mu$m, am meisten bevorzugt 350-600 $\mu$m aufweist.

Das Imprägnierungsmittel für das feste Trägermaterial der Schicht (B) ist ein Permanganatsalz, das ausgewählt ist aus Natriumpermanganat ($NaMnO_4$), Kaliumpermanganat ($KMnO_4$), Magnesiumpermanganat ($Mg(MnO_4)_2$), Calciumpermanganat ($CaMnO_4$), Bariumpermanganat ($BaMnO_4$), Lithiumpermanganat ($LiMnO_4$), und einer Kombination davon, wobei die handelsüblichen und kostengünstigeren Verbindungen Natriumpermanganat ($NaMnO_4$) und/oder Kaliumpermanganat ($KMnO_4$) bevorzugt sind. Imprägnierte feste Trägermaterialien sind kommerziell erhältlich. Das feste Trägermaterial der Schicht (B) kann dabei je nach Bedarf mit einem Permanganatsalz oder mehreren Permanganatsalz imprägniert sein. Je besser löslich das Permanganatsalz in Wasser ist, desto bevorzugter ist es in der Regel als Imprägnierungsmittel in Schicht (B). Ferner ist die Anwendung eines Permanganatsalzes bevorzugt, mit dem ein möglichst hoher Imprägnierungsgrad erreicht werden kann. So ist auf Aluminiumoxid ($Al_2O_3$) Kaliumpermanganat ($KMnO_4$) bevorzugt und Natriumpermanganat ($NaMnO_4$) besonders bevorzugt.

US 2015/0314262 A1 beschreibt zudem verschiedene Verfahren zur Imprägnierung eines festen Trägermaterials mit einem Permanganatsalz.

Das feste Trägermaterial weist einen Imprägnierungsgrad von 1 bis 30 Gew. % auf, insbesondere 2 bis 20 Gew. %, bevorzugt 3 bis 15 Gew. %, besonders bevorzugt 4 bis 12 Gew. %. Ein geeigneter Imprägnierungsgrad wird in Hinsicht auf das verwendete feste Trägermaterial gewählt.

In einer Ausführungsform weist das feste Trägermaterial der Schicht (B) ein Flächengewicht von 50 bis 600 $g/m^2$ auf, insbesondere von 100 bis 500 $g/m^2$, bevorzugt 150 bis 400 $g/m^2$, mehr bevorzugt 200 bis 300 $g/m^2$.

Unerwünschte molekulare Bestandteile der Luft werden an Schicht (B) oxidiert. Insbesondere wird beispielsweise NO an Schicht (B) zu $NO_2$ oxidiert. Da Oxide von Nichtmetallen wie etwa Stickstoff und Schwefel in der Regel saure Eigenschaften aufweisen und somit mit basischen Materialien reagieren, wird durch die Oxidation an Schicht (B) eine Chemisorption an der basisch imprägnierten Schicht (C) besonders vorteilhaft möglich. Die Oxidationskapazität der Schicht (B) kann beispielsweise durch das Flächengewicht und den Imprägnierungsgrad gesteuert werden.

Schicht (C)

Die Schicht (C) umfasst eine basisch imprägnierte Aktivkohle. Bei der Base handelt es sich um ein Metallsalz, das als Anion ein Anion enthält, das aus Hydroxid, Carbonat und einer Kombination davon ausgewählt ist. In einer bevorzugten Ausführungsform ist die Base ausgewählt aus Kaliumhydroxid (KOH), Natriumhydroxid (NaOH), Kaliumcarbonat ($K_2CO_3$), Natriumcarbonat ($Na_2CO_3$) und einer Kombination davon. Besonders bevorzugt sind hierbei die handelsüblichen und kostengünstigen Basen Kaliumhydroxid (KOH) und/oder Kaliumcarbonat ($K_2CO_3$). Die Aktivkohle der Schicht (C) kann dabei je nach Bedarf mit einer Base oder mehreren Basen imprägniert sein. Je besser löslich die Base in Wasser ist, desto bevorzugter ist sie in der Regel als Imprägnierungsmittel in Schicht (C).

Die Aktivkohle weist einen Imprägnierungsgrad von 1 bis 30 Gew. % auf, insbesondere 5 bis 20 Gew. %, bevorzugt 10 bis 15 Gew. %.

In einer Ausführungsform weist die Aktivkohle der Schicht (C) ein Flächengewicht von 50 bis 600 $g/m^2$ auf, insbesondere von 100 bis 500 $g/m^2$, bevorzugt 150 bis 400 $g/m^2$, mehr bevorzugt 200 bis 300 $g/m^2$. Das zu verwendende Flächengewicht kann je nach Stärke der erwünschten adsorptiven Eigenschaften der imprägnierten Aktivkohle (u.a. abhängig von dessen Imprägnierungsgrad) variiert werden.

In einer weiteren Ausführungsform weist die Schicht (C) eine Korngröße von 10 bis 80 mesh auf, bevorzugt von 30 bis 60 mesh. Die Korngröße der Aktivkohle kann durch geeignete Auswahl des Ausgangsmaterials zur Herstellung der Aktivkohle und/oder Art der Aktivierung gesteuert werden und insbesondere durch Mahlen und Sieben eingestellt werden.

In einer weiteren Ausführungsform weist die Schicht (C) eine BET-Oberfläche von 500 bis 1500 $m^2$/g auf. Die

BET-Oberfläche der Aktivkohle kann durch geeignete Auswahl des Ausgangsmaterials zur Herstellung der Aktivkohle und/oder Art der Aktivierung gesteuert werden.

Ferner ist die Anwendung einer Base bevorzugt, mit der ein möglichst hoher Imprägnierungsgrad erreicht werden kann. Dies kann zudem erreicht werden, indem die Aktivkohle eine möglichst hohe spezifische Oberfläche aufweist und ein Verfahren zur Imprägnierung (z.B. Nass- oder Sprühverfahren) mehrmals mit frischer Basen-Lösung wiederholt wird. Beim Nassverfahren kann die Aktivkohle während ihrer Aktivierung (insbesondere während der Gasaktivierung) mit einer wässrigen Lösung aus geeigneter Base bestimmter Konzentration versetzt und anschließend erhitzt werden. Während der Erhitzung werden die unerwünschten angelagerten Wassermoleküle aus der Aktivkohlenoberfläche entfernt. Im Gegensatz dazu wird im Sprühverfahren eine wässrige Lösung aus geeigneter Base bestimmter Konzentration auf die Aktivkohle gesprüht.

Unerwünschte molekulare Bestandteile des Gasstroms, die bereits durch die Schicht (B) geströmt sind und saure Eigenschaften aufweisen, werden an der Schicht (C) abgeschieden. Insbesondere wird $NO_2$, aber auch $SO_2$ und $SO_3$, in Gegenwart von imprägnierten Base-Molekülen der Schicht (C) abgeschieden.

Es ist daher wünschenswert, die Oberfläche der Aktivkohle möglichst effizient durch Basenmoleküle zu bedecken. Durch eine hohe Bedeckung der Oberfläche, d.h. einen hohen Imprägnierungsgrad, kann einerseits die Fähigkeit, saure Schadgasmoleküle zu chemisorbieren, gesteigert werden, und zudem kann eine in dieser Schicht unerwünschte reduzierende Eigenschaft der Aktivkohle minimiert oder vollständig unterdrückt werden. Es kann somit die unerwünschte Reduktion von Schadgasen unterdrückt werden, deren saure Eigenschaften zur Chemisorption durch die Base, mit der die Aktivkohle der Schicht (C) imprägniert ist, genutzt werden sollen.

Mittel zur Stabilisierung:

Das Mittel zur Stabilisierung dient dazu, die flächige Anordnung des Trägermaterials (imprägnierte oder nichtimprägnierte Aktivkohle; festes, mit Permanganatsalz imprägniertes Trägermaterial) gegen mechanische Einwirkung zu stabilisieren und das Trägermaterial zu immobilisieren.

In einer Ausführungsform umfasst eine, zwei oder jede der Schichten (A) bis (C) ein Mittel zur Stabilisierung. In einer weiteren Ausführungsformumfassen zwei oder mehr der Schichten (A) bis (C) ein Mittel zur Stabilisierung und in den zwei oder mehr Schichten liegen das gleiche Mittel zur Stabilisierung oder unterschiedliche Mittel zur Stabilisierung vor. In einer bevorzugten Ausführungsform umfasst jede der Schichten (A) bis (C) ein Mittel zur Stabilisierung. In einer Ausführungsform ist das Mittel zur Stabilisierung ausgewählt aus einem Klebstoff, einer Trägerlage und einer Kombination davon. Die Menge und/oder die Art des Mittels zur Stabilisierung sollte so gewählt werden, dass ein Druckabfall des das Filtermedium durchströmenden Gases weitestgehend vermieden wird. Bei dem Mittel zur Stabilisierung sollte es somit um ein luftdurchlässiges Mittel handeln. In einer bevorzugten Ausführungsform handelt es sich bei der Trägerlage um eine textile Trägerlage. In einer besonders bevorzugten Ausführungsform handelt es sich bei der textilen Trägerlage um ein Vlies. In einer weiter bevorzugten Ausführungsform besteht das Vlies aus Polymerfasern. Bevorzugte Polymer-Bestandteile des Vlieses können ausgewählt werden aus Polyurethan, Polyester, Polypropylen, Polyethylen, Polyamid, Polyacrylnitril, Polycarbonat, und Kombinationen davon.

Die Wahl eines geeigneten Mittels der Stabilisierung kann je nach Beschaffenheit der zu stabilisierenden Schicht (A), (B) und/oder (C) vorgenommen werden, insbesondere in Abhängigkeit von chemischen und physikalischen Parameter wie Flächengewicht, Korngröße, BET-Oberfläche, Zusammensetzung, Imprägnierung bzw. Imprägnierungsgrad. Weiterhin kann die Wahl eines geeigneten Mittels der Stabilisierung von der Menge des Trägermaterials (imprägnierte oder nicht-imprägnierte Aktivkohle; festes, mit Permanganatsalz imprägniertes Trägermaterial) auf einer bestimmten Schicht abhängen. Je nach Bedarf, kann so eine einzelne Schicht zur Stabilisierung ausreichen oder es werden ein oder mehrere Mittel zur Stabilisierung kombiniert.

Optionale Schicht (D)

Gemäß einer noch weiteren Ausführungsform kann das Filtermedium zumindest noch eine weitere Schicht aufweisen, die säureimprägnierte Aktivkohle, Kaliumiodid-imprägnierte Aktivkohle, ein textiles flächiges Material oder eine Kombination davon umfasst.

Eine weitere Schicht kann somit säureimprägnierte Aktivkohle umfassen, wobei die Säure insbesondere ausgewählt ist aus Phosphorsäure ($H_3PO_4$), Schwefelsäure ($H_2SO_4$), und einer Kombination davon. Die Säureimprägnierung dient beispielsweise der gezielten Entfernung von alkalischen Gasen wie Ammoniak oder Aminen.

Ferner kann eine weitere Schicht Kaliumiodid-imprägnierte Aktivkohle umfassen, die zur gezielten Entfernung von Schadgasen wie Schwefelwasserstoff ($H_2S$) und Merkaptanen geeignet ist.

Eine weitere Schicht kann textiles flächiges Material umfassen, die aus Naturfasern, synthetischen Polymerfasern oder einer Kombination davon besteht. Diese Schicht dient der Entfernung von Partikeln aus dem durchströmenden Gas. Bei dem textilen flächigen Material handelt es sich dabei um ein Gewebe, ein Gewirke, ein Gestrick oder Vlies.

Filtermedium

Die Schichten (B) und (C) sind im Filtermedium so angeordnet, dass ein durch das Filtermedium strömendes Gas die Schicht (B) vor der Schicht (C) durchströmt. Durch dieses besondere Merkmal können Schadgase auf höchsteffiziente Art und Weise aus der Umgebungsluft entfernt werden. Dabei werden Schadgase (z.B. NO) zunächst in Schicht (B) oxidiert (z.B. $NO_2$) und anschließend auf der basisch-imprägnierten Aktivkohle der Schicht (C) effizient abgeschieden. Die Abscheidung erfolgt vorzugsweise durch Chemisorption. Es wird eine gezielte und effiziente Entfernung von unerwünschten sauren Gasen (wie Stickoxiden) aus der Luft erreicht.

Die Schicht (A) ist so angeordnet, dass ein durch das Filtermedium strömendes Gas die Schicht (A) vor der Schicht (B) oder die Schicht (A) nach der Schicht (C) durchströmt.

In einer Ausführungsform wird die Schicht (A) im Filtermedium ausströmseitig angeordnet (Gas durchströmt Schicht (A) nach Schichten (B) und (C)). Bei dieser Anordnung kann vermieden werden, dass unerwünschte und daher abzutrennende Bestandteile des Gasstroms durch Kontakt mit Aktivkohle der Schicht (A) zunächst reduziert werden und dann beim Passieren der Schicht (B) erneut oxidiert werden müssen, um in Schicht (C) chemisorbiert werden zu können. Die oxidative Kapazität der Schicht (B) kann somit effizienter genutzt werden und die Standzeit der Schicht (B) erhöht werden.

In einer bevorzugten Ausführungsform wird die Schicht (A) im Filtermedium anströmseitig angeordnet (Gas durchströmt Schicht (A) vor Schichten (B) und (C)). Bei dieser Anordnung können Schadgase zumindest teilweise abgetrennt werden, bevor der Gasstrom die Schichten (B) und (C) erreicht. Auch in diesem Fall kann die Kapazität der Schichten (B) und (C) somit effizient für solche Schadgase genutzt werden, die in der Schicht (A) nicht adsorbiert werden können, so dass die Standzeit der Schichten (B) und (C) erhöht werden kann.

In einer weiteren Ausführungsform weist jede der Schichten (A) bis (C) eine unterschiedliche Zusammensetzung auf. Durch dieses Merkmal wird insbesondere eine gezielte Aufeinanderfolge von den Reaktionen erreicht, wodurch Schadgase schichtweise zu Schadgas-Intermediaten umgesetzt werden und schließlich irreversibel an Schicht (C) abgeschieden werden. Es können so unerwünschte und kontraproduktive Nebenreaktionen vermieden werden.

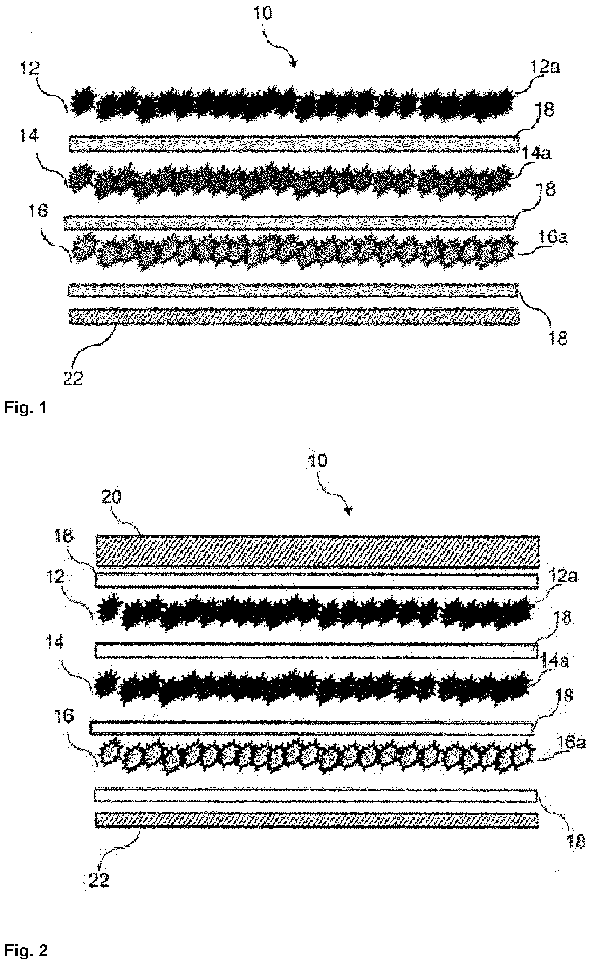

In **Fig.** 1 ist ein Filtermedium **10** gemäß einer Ausführungsform der Erfindung dargestellt, insbesondere für einen Luftfilter, insbesondere einen Innenraumfilter oder für eine Brennstoffzelle, wobei das Filtermedium eine äußere Schicht (A) **12**, die Aktivkohlepartikel **12a** umfasst; eine zweite, mittlere Schicht (B) **14**, die Partikel aus festem Trägermaterial umfasst, das mit einem Permanganatsalz imprägniert ist **14a**; und eine dritte, äußere Schicht **16**, die basisch imprägnierte Aktivkohlepartikel **16a** umfasst. Die Aktivkohlepartikel **12a** der Schicht (A) **12** des Filtermediums **10** können, wie in **Fig. 1** schematisch gezeigt, auch durch Zusatz eines Mittels zur Stabilisierung **18**, beispielsweise eines Klebstoffs, immobilisiert werden. Der Klebstoff **18** kann vorteilhaft auf Basis von Polyurethan sein. Die Aktivkohlepartikel **12a** der Schicht (A) **12** können ein Flächengewicht von 50 bis 600 $g/m^2$ aufweisen, insbesondere von 100 bis 500 $g/m^2$, bevorzugt 150 bis 400 $g/m^2$, mehr bevorzugt 200 bis 300 $g/m^2$. Die Schicht (A) **12** ermöglicht vorteilhaft eine Vorabscheidung von Schadgasen aus der Umgebungsluft auf. Es kann jedoch in Schicht (A) eine Reduktion von $NO_2$ zu NO erfolgen.

Die Partikel aus festem Trägermaterial, die mit einem Permanganatsalz imprägniert sind **14a,** der zweiten, mittleren Schicht (B) **14,** des Filtermediums **10** können wie in Fig. 1 schematisch gezeigt auch durch Zusatz eines Mittels zur Stabilisierung **18,** beispielsweise eines Klebstoffs, immobilisiert werden. Der Klebstoff **18** kann beispielsweise auf Basis von Polyurethan sein. Die mittlere Schicht (B) **14** weist Permanganatsalz-imprägnierte, feste Trägermaterialpartikel auf, an denen u.a. Stickstoffmonoxid-Moleküle (NO) zu Stickstoffdioxid-Molekülen ($NO_2$) oxidiert werden. Beispielsweise kann der Imprägnierungsgrad 1 bis 30 Gew. % sein, insbesondere 2 bis 20 Gew. %, bevorzugt 3 bis 15 Gew. %, besonders bevorzugt 4 bis 12 Gew. %.

Besonders vorteilhaft können die Partikel **14a** der mittleren Schicht **14** ein Flächengewicht von 50 bis 600 $g/m^2$ haben, insbesondere von 100 bis 500 $g/m^2$, bevorzugt 150 bis 400 $g/m^2$, mehr bevorzugt 200 bis 300 $g/m^2$.

Die basisch imprägnierte Aktivkohlepartikel **16a** der dritten Schicht (C) **16** können wie in Fig. 1 schematisch gezeigt auch durch Zusatz eines Mittels zur Stabilisierung **18,** beispielsweise eines Klebstoffs, immobilisiert werden. Der Klebstoff **18** kann vorteilhaft auf Basis von Polyurethan sein. Die dritte Schicht (C) **16** weist basisch imprägnierte Aktivkohlepartikel **16a** auf, an denen Stickstoffdioxid-Moleküle ($NO_2$) durch Chemisorption abgeschieden werden. Die Chemisorption ermöglicht hierbei eine gegenüber der Physisorption chemische und damit stärkere Bindung an das Adsorbens, wodurch Schadgase (insbesondere Stickoxide) vorteilhaft gebunden werden.

Besonders vorteilhaft können die Partikel **16a** der dritten Schicht (C) **16** ein Flächengewicht von 100 bis 500 $g/m^2$ haben, bevorzugt 150 bis 400 $g/m^2$, mehr bevorzugt 200 bis 300 $g/m^2$.

Das Filtermedium **10** kann zudem eine Trägerlage **22,** insbesondere eine textile Trägerlage **22,** insbesondere eine als Vlies ausgebildete Trägerlage **22,** aufweisen.

Das in **Fig. 2** gezeigte Filtermedium entspricht dem in Fig. 1 gezeigten im Wesentlichen. Das Filtermedium 10 weist zudem eine Partikelfilterlage 20 auf, die insbesondere als eine oder mehrere Vlieslage(n) ausgebildet sein kann.

Filtermedienkörper

Der Filtermedienkörper umfasst ein erfindungsgemäßes Filtermedium und mindestens ein Seitenband und/oder mindestens ein Kopfband. In einer Ausführungsform ist der Filtermedienkörper als Wickelkörper, geschichtet als Flachfilter oder gefaltet als Filterbalg ausgebildet.

Filterelement

Das Filterelement umfasst einen erfindungsgemäßen Filtermedienkörper und/oder umfasst ein erfindungsgemäßes Filtermedium und einen Rahmen, mindestens ein Halteelement und/oder mindestens eine Dichtung.

Luftfilter

Der Luftfilter umfasst einen erfindungsgemäßen Filtermedienkörper und/oder ein erfindungsgemäßes Filtermedium.

Verfahren zur Herstellung eines Filtermediums

Verfahren zur Herstellung eines erfindungsgemäßen Filtermediums umfassend die Schritte: Aufbringen einer Schicht (A) umfassend Aktivkohle, Aufbringen einer Schicht (B) umfassend ein festes Trägermaterial, das mit einem Permanganatsalz imprägniert ist, Aufbringen einer Schicht (C) umfassend einer basisch imprägnierten Aktivkohle, wenn die Schicht (A) so angeordnet ist, dass ein durch das Filtermedium strömendes Gas die Schicht (A) vor der Schicht (B) durchströmt, oder

ein Verfahren zur Herstellung eines weiteren erfindungsgemäßen Filtermediums umfassend die Schritte: Aufbringen einer Schicht (B) umfassend ein festes Trägermaterial, das mit einem Permanganatsalz imprägniert ist, Aufbringen einer Schicht (C) umfassend einer basisch imprägnierten Aktivkohle, Aufbringen einer Schicht (A) umfassend Aktivkohle, wenn die Schicht (A) so angeordnet ist, dass ein durch das Filtermedium strömendes Gas die Schicht (A) nach der Schicht (C) durchströmt, so dass

die Schichten (B) und (C) so angeordnet sind, dass ein durch das Filtermedium strömendes Gas die Schicht (B) vor der Schicht (C) durchströmt, die Schicht (A) so angeordnet ist, dass ein durch das Filtermedium strömendes Gas die Schicht (A) vor der Schicht (B) oder die Schicht (A) nach der Schicht (C) durchströmt.

In einer Ausführungsform weist jede der aufgebrachten Schichten (A) bis (C) eine unterschiedliche Zusammensetzung auf.
Ein weiteres Verfahren zur Herstellung eines erfindungsgemäßen Filtermediums, wobei mindestens eine weitere Schicht (D) auf die zuerst und auf die zuletzt aufgebrachte Schicht aufgebracht wird, oder mindestens eine weitere Schicht (D) auf die zuerst oder auf die zuletzt aufgebrachte Schicht aufgebracht wird.

Verwendung

Ein erfindungsgemäßes Filtermedium, ein erfindungsgemäßer Filtermedienkörper, ein erfindungsgemäßes Filterelement oder ein erfindungsgemäßer Luftfilter können in einer Vorrichtung zur Reinigung von Umgebungsluft verwendet werden. In bevorzugten Ausführungsformen kann es sich bei der Vorrichtung um einen Außenraumluftreiniger bzw. eine Umgebungsluftreinigungsvorrichtung, Klimatisierungsanlage, Lüftungsanlage, ein Ventilationssystem oder eine Brennstoffzelle, insbesondere einen Brennstoffzellenluftfilter, insbesondere einen Brennstoffzellen-Kathodenluftfilter handeln.

**Beispiele**

Beispiel 1 - Filtermedium enthaltend drei Adsorbentien in dreischichtigem Aufbau

Es werden drei Adsorbentien bereitgestellt: (a) Aktivkohle, (b) mit Kaliumpermanganat imprägniertes Aluminiumoxid und (c) basisch imprägnierte Aktivkohle.
Bei der in den Adsorbentien (a),(c) enthaltenen Aktivkohle handelt es sich um Wasserdampfaktivierte Aktivkohle (Körngröße 30-60 mesh, spezifische Oberfläche 1000 $m^2/g$;). Das Adsorbens (a) besteht aus dieser Aktivkohle, die ohne weitere Vorbehandlung verwendet wird.
Zur Herstellung des Adsorbens (b) wurde Aluminiumoxid mit einer wässrigen Lösung von Kaliumpermanganat

(KMnO$_4$) imprägniert.

Das so erhaltene Adsorbens wies einen Imprägnierungsgrad von 6 % auf. Bis zur Verwendung wurde das Adsorbens unter folgenden Bedingungen gelagert: 23 °C, 50 % r.F.

Zur Herstellung des Adsorbens (c) wurde die Aktivkohle mit einer wässrigen Lösung aus Kaliumcarbonat imprägniert.

Die so erhaltene imprägnierte Aktivkohle wies einen Imprägnierungsgrad von 10 m.% auf. Bis zur Verwendung wurde die imprägnierte Aktivkohle unter folgenden Bedingungen gelagert: 23 °C, 50 % r.F.

Aus diesen Adsorbentien (a)-(c) wurde ein Filtermedium mit dreischichtigem Aufbau hergestellt, indem eine Schicht des Adsorbens (a) mit einem Flächengewicht von 400 g/m$^2$, eine Schicht des Adsorbens (b) mit einem Flächengewicht von 1300 g/m$^2$ und eine Schicht des Adsorbens (c) mit einem Flächengewicht von 400 g/m$^2$ jeweils auf einem porösen Träger mit einem Durchmesser von 185 mm angeordnet werden. Die porösen Träger mit der Schicht des jeweiligen Adsorbens wurden so übereinander angeordnet, dass die Adsorbentien in der Reihenfolge (a) → (b) → (c) durchströmt werden konnten, d.h. wie in Fig. 1 dargestellt.

Um die Adsorptionseigenschaften des so gebildeten Filtermediums zu untersuchen, wurde das Filtermedium in einen Prüfstand eingesetzt und zunächst durch Erwärmen auf 80 °C für 15 Minuten konditioniert, während man das Testgasgemisch durch das Filtermedium strömen ließ. Als Testgas wurde Luft mit einer Temperatur von 23 ± 1 °C und einer relativen Feuchte von 50 ± 3 % verwendet, der 15 ± 1 ppm Stickstoffmonoxid (NO) und 15 ± 1 ppm Stickstoffdioxid (NO$_2$) zugesetzt wurden.

Nach dem Konditionieren ließ man dieses Testgas mit einer Geschwindigkeit von 10 cm/s (± 2 %) während einer Testdauer von 60 Minuten durch das Filtermedium strömen. Es wurden der Druckverlust über das Filtermedium und die Konzentration der Gesamtstickoxide (NO$_x$) und des Stickstoffmonoxids (NO) im abströmenden Testgas (d.h. nach Durchströmen des Filtermediums) parallel gemessen (FTIR), wobei über die gesamte Testdauer alle 10 Sekunden Messwerte aufgezeichnet wurden. Die Konzentration des Stickstoffdioxids (NO$_2$) wurde als Differenz aus der Konzentration der Gesamtstickoxide (NO$_x$) und der Konzentration des Stickstoffmonoxids (NO) berechnet. Die adsorbierte Menge des Stickstoffdioxids (NO$_2$) und des Stickstoffmonoxids (NO) wird anhand des Volumenstroms, der Konzentration des Stickstoffdioxids (NO$_2$) und des Stickstoffmonoxids (NO) im abströmenden Testgas und der Molekülmasse von Stickstoffdioxids (M(NO$_2$) = 46,01 g/mol) und des Stickstoffmonoxids (M(NO) = 30,01 g/mol) berechnet. Soweit hier nicht anders beschrieben, sind alle Testbedingungen und Parameter gemäß ISO 11155-2 gewählt.

Die Ergebnisse sind in Tabelle 1 dargestellt. Die Konzentration von Stickstoffmonoxid und Stickstoffdioxid werden relativ zur Konzentration des jeweiligen Gases vor dem Durchströmen des Filtermediums in Prozent angegeben. Da Stickstoffdioxid bei Inkontaktbringen mit Aktivkohle zum Teil zu Stickstoffmonoxid reagiert, werden im abströmenden Testgas in einigen Fällen relative Konzentrationen von Stickstoffmonoxid von mehr als 100 % beobachtet.

Vergleichsbeispiel 1 - Filtermedium enthaltend drei Adsorbentien in Mischung in einschichtigem Aufbau

Unter Verwendung der Adsorbentien (a)-(c) wie in Beispiel 1 beschrieben wurde ein einschichtiges Filtermedium hergestellt. Dazu wurde eine Schicht mit einem Flächengewicht von 2100 g/m$^2$ aus einer homogenen Mischung von 400 Gewichtsteilen des Adsorbens (a), 1300 Gewichtsteilen des Adsorbens (b) und 400 Gewichtsteilen des Adsorbens (c) auf einem porösen Träger mit einem Durchmesser von 185 mm gebildet.

Das so gebildete Filtermedium wurde in einen Prüfstand eingesetzt, konditioniert und seine Adsorptionseigenschaften wie im Beispiel 1 beschrieben untersucht.

Die Ergebnisse sind in Tabelle 1 dargestellt.

Vergleichsbeispiel 2 - Filtermedium enthaltend ein Adsorbens in einschichtigem Aufbau

Unter Verwendung des Adsorbens (a) wie in Beispiel 1 beschrieben wurde ein einschichtiges Filtermedium hergestellt. Dazu wurde eine Schicht mit einem Flächengewicht von 2100 g/m$^2$ aus dem Adsorbens (a) auf einem porösen Träger mit einem Durchmesser von 185 mm gebildet.

Das so gebildete Filtermedium wurde in einen Prüfstand eingesetzt, konditioniert und seine Adsorptionseigenschaften wie im Beispiel 1 beschrieben untersucht.

Die Ergebnisse sind in Tabelle 1 dargestellt.

Tabelle 1: Adsorptionseigenschaften der Filtermedien
- Durchbruch von NO und $NO_2$ zu verschiedenen Messzeitpunkten
- Adsorbierte Menge (NO/$NO_2$/gesamt $NO_x$) nach 60 Minuten

| | | Beispiel 1 | | Vergleichs-beispiel 1 | | Vergleichs-beispiel 2 | |
|---|---|---|---|---|---|---|---|
| | Zeit t [min] | NO [%] | $NO_2$ [%] | NO [%] | $NO_2$ [%] | NO [%] | $NO_2$ [%] |
| Durchbruch zum Zeit- | 0 | 37 | 0 | 43 | 2,4 | 47 | 0 |
| | 5 | 56 | 0,4 | 62 | 4,5 | 69 | 0,6 |
| | 15 | 74 | 0,7 | 77 | 6,1 | 85 | 0,8 |
| | 30 | 91 | 1 | 89 | 9,5 | 98 | 1,0 |
| | 60 | 110 | 1,2 | 101 | 16,6 | 113 | 1,3 |
| adsorbiert (t = 60 min) [mg] | | 23 | 272 | 25 | 250 | 11 | 276 |
| adsorbiert $NO_x$ (t = 60 min) [mg] | | 295 | | 275 | | 287 | |

Überraschenderweise wurde gefunden, dass das Filtermedium gemäß Beispiel 1, d.h. ein Filtermedium mit drei Adsorbentien (a), (b) und (c) in dreischichtigem Aufbau, einen deutlich geringeren $NO_2$-Durchbruch (zum Zeitpunkt t = 60 Minuten: 1,2 % vs. 16,6 %, d.h. eine um den Faktor (1,2/16,6 =) 13 geringere Konzentration) zeigt und in der Lage ist, eine höhere Menge $NO_x$ (+ 7,3 %) zu adsorbieren, als das Filtermedium gemäß Vergleichsbeispiel 1, d.h. ein Filtermedium mit drei Adsorbentien (a), (b) und (c) in Mischung in einschichtigem Aufbau mit gleichem Gesamtflächengewicht.

**Patentansprüche**

1. Filtermedium umfassend drei Schichten (A) bis (C), wobei

   die Schicht (A) nicht imprägnierte Aktivkohle umfasst,
   die Schicht (B) ein festes Trägermaterial umfasst, das mit einem Permanganatsalz imprägniert ist, und
   die Schicht (C) basisch imprägnierte Aktivkohle umfasst,
   wobei
   die Schichten (B) und (C) so angeordnet sind, dass ein durch das Filtermedium strömendes Gas die Schicht (B) vor der Schicht (C) durchströmt, und
   die Schicht (A) so angeordnet ist, dass ein durch das Filtermedium strömendes Gas die Schicht (A) vor der Schicht (B) oder die Schicht (A) nach der Schicht (C) durchströmt.

2. Filtermedium gemäß Anspruch 1, wobei jede der Schichten (A) bis (C) eine unterschiedliche Zusammensetzung aufweist.

3. Filtermedium gemäß Anspruch 1 oder Anspruch 2, wobei eine, zwei oder jede einzelne der Schichten (A) bis (C) ein Mittel zur Stabilisierung der Schicht umfasst, wobei das gleiche Mittel zur Stabilisierung der Schicht oder unterschiedliche Mittel zur Stabilisierung vorliegen können, wenn zwei oder mehr der Schichten (A) bis (C) ein Mittel zur Stabilisierung der Schicht umfassen.

4. Filtermedium gemäß einem der Ansprüche 1-3, wobei das Mittel zur Stabilisierung der Schicht jeweils ausgewählt ist aus einem Klebstoff, einer Trägerlage, bevorzugt einer textilen Trägerlage, insbesondere einem Vlies, und einer Kombination davon, wobei das Vlies vorzugsweise aus Polymerfasern besteht, wobei das Polymer ausgewählt ist aus Polyurethan, Polyester, Polypropylen, Polyethylen, Polyamid, Polyacrylnitril, Polycarbonat und Kombinationen davon.

5. Filtermedium gemäß einem der Ansprüche 1-4, wobei

die Schicht (A) Aktivkohle, aber kein Trägermaterial, das mit einem Permanganatsalz imprägniert ist, und keine basisch imprägnierte Aktivkohle umfasst;
die Schicht (B) ein festes Trägermaterial, das mit einem Permanganatsalz imprägniert ist, aber keine nicht imprägnierte Aktivkohle und keine basisch imprägnierte Aktivkohle umfasst;
die Schicht (C) basisch imprägnierte Aktivkohle, aber kein Trägermaterial, das mit einem Permanganatsalz imprägniert ist, und keine nicht imprägnierte Aktivkohle umfasst.

6. Filtermedium gemäß einem der Ansprüche 1-5, wobei

die Schicht (A) aus nicht imprägnierter Aktivkohle und einem Mittel zur Stabilisierung der Schicht besteht;
die Schicht (B) aus einem festen Trägermaterial und einem Mittel zur Stabilisierung der Schicht, die mit einem Permanganatsalz imprägniert ist, besteht;
die Schicht (C) aus basisch imprägnierter Aktivkohle und einem Mittel zur Stabilisierung der Schicht besteht.

7. Filtermedium gemäß einem der Ansprüche 1-6, wobei das feste Trägermaterial der Schicht (B) ausgewählt ist aus Aluminiumoxid ($Al_2O_3$), Kieselgel ($SiO_2$), Zirkonoxid ($ZrO_2$), Titanoxid ($TiO_2$), Zeolith, Kaolin, Ton, Bauxit und einer Kombination davon; und/oder wobei das Permanganatsalz, mit dem das feste Trägermaterial der Schicht (B) imprägniert ist, ausgewählt ist aus Natriumpermanganat ($NaMnO_4$), Kaliumpermanganat ($KMnO_4$), und einer Kombination davon.

8. Filtermedium gemäß einem der Ansprüche 1-7, wobei die Aktivkohle der Schicht (A) und/oder die basisch imprägnierte Aktivkohle in Schicht (C) eine BET-Oberfläche von 300-1500 $m^2$/g aufweist, insbesondere 500-1500 $m^2$/g.

9. Filtermedium gemäß einem der Ansprüche 1-8, wobei die Base, mit der die Aktivkohle der Schicht (C) imprägniert ist, ausgewählt ist aus Kaliumhydroxid (KOH), Natriumhydroxid (NaOH), Kaliumcarbonat ($K_2CO_3$), Natriumcarbonat ($Na_2CO_3$) und einer Kombination davon; und/oder wobei die basisch imprägnierte Aktivkohle der Schicht (C) einen Imprägnierungsgrad von 1 bis 30 Gew.%, bevorzugt 5 bis 20 Gew.%, mehr bevorzugt 10 bis 15 Gew.% aufweist.

10. Filtermedienkörper, umfassend ein Filtermedium gemäß einem der Ansprüche 1-9, und mindestens ein Seitenband und/oder mindestens ein Kopfband.

11. Filterelement umfassend (i) einen Filtermedienkörper gemäß Anspruch 10 oder ein Filtermedium gemäß einem der Ansprüche 1-9 und (ii) einen Rahmen, mindestens ein Halteelement und/oder mindestens eine Dichtung.

12. Luftfilter umfassend ein Gehäuse und ein Filterelement gemäß Anspruch 11, ein Filtermedienkörper gemäß Anspruch 10 oder ein Filtermedium gemäß einem der Ansprüche 1-9.

13. Verfahren zur Herstellung eines Filtermediums umfassend drei Schichten (A) bis (C) gemäß einem der Ansprüche 1-9, umfassend die Schritte:

(i) Aufbringen einer Schicht (A) umfassend Aktivkohle;
(ii) Aufbringen einer Schicht (B) umfassend ein festes Trägermaterial, das mit einem Permanganatsalz imprägniert ist;
(iii) Aufbringen einer Schicht (C) umfassend einer basisch imprägnierten Aktivkohle,
wenn die Schicht (A) so angeordnet ist, dass ein durch das Filtermedium strömendes Gas die Schicht (A) vor der Schicht (B) durchströmt;
oder umfassend die Schritte:

(i) Aufbringen einer Schicht (B) umfassend ein festes Trägermaterial, das mit einem Permanganatsalz imprägniert ist;

(ii) Aufbringen einer Schicht (C) umfassend einer basisch imprägnierten Aktivkohle,
(iii) Aufbringen einer Schicht (A) umfassend Aktivkohle,

wenn die Schicht (A) so angeordnet ist, dass ein durch das Filtermedium strömendes Gas die Schicht (A) nach der Schicht (C) durchströmt;
so dass
die Schichten (B) und (C) so angeordnet sind, dass ein durch das Filtermedium strömendes Gas die Schicht (B) vor der Schicht (C) durchströmt,
die Schicht (A) so angeordnet ist, dass ein durch das Filtermedium strömendes Gas die Schicht (A) vor der Schicht (B) oder die Schicht (A) nach der Schicht (C) durchströmt.

14. Verfahren zur Herstellung eines Filtermediums gemäß Anspruch 13, wobei jede der Schichten (A) bis (C) eine unterschiedliche Zusammensetzung aufweist.

15. Verwendung eines Filtermediums gemäß einem der Ansprüche 1-9, eines Filtermedienkörpers gemäß Anspruch 10, eines Filterelements gemäß Anspruch 11 oder eines Luftfilters gemäß Anspruch 12 in einer Vorrichtung zur Reinigung von Umgebungsluft, wobei die Vorrichtung vorzugsweise eine Klimatisierungsanlage, eine Lüftungsanlage, ein Ventilationssystem oder eine Brennstoffzelle, insbesondere einen Brennstoffzellenluftfilter, insbesondere einen Brennstoffzellen-Kathodenluftfilter ist.

**Claims**

1. Filter medium comprising three layers (A) to (C), wherein

layer (A) comprises non-impregnated activated carbon,
the layer (B) comprises a solid base material impregnated with a permanganate salt, and
the layer (C) comprises basically impregnated activated carbon,
wherein
the layers (B) and (C) are disposed in such a way that a gas flowing through the filter medium flows through the layer (B) before the layer (C), and
the layer (A) is disposed in such a way that a gas flowing through the filter medium flows through the layer (A) before the layer (B) or through the layer (A) after the layer (C).

2. Filter medium according to claim 1, wherein each of the layers (A) to (C) features a different composition.

3. Filter medium according to claim 1 or claim 2, wherein one, two or each of the layers (A) to (C) comprises a means for stabilizing the layer, wherein the same means for stabilizing the layer or different means for stabilizing may be present when two or more of the layers (A) to (C) comprise a means for stabilizing the layer.

4. Filter medium according to one of the claims 1 to 3, wherein the means for stabilizing the layer is selected in each case from an adhesive, a carrier layer, preferably a textile carrier layer, in particular a non-woven fabric, and a combination thereof, wherein the non-woven fabric preferably consists of polymer fibers, wherein the polymer is selected from polyurethane, polyester, polypropylene, polyethylene, polyamide, polyacrylonitrile, polycarbonate and combinations thereof.

5. Filter medium according to one of the claims 1 to 4, wherein

the layer (A) comprises activated carbon but no base material impregnated with a permanganate salt and no basically impregnated activated carbon;
the layer (B) comprises a solid base material impregnated with a permanganate salt, but no non-impregnated activated carbon and no basically impregnated activated carbon;
the layer (C) comprises basically impregnated activated carbon, but no base material impregnated with a permanganate salt, and no non-impregnated activated carbon.

6. Filter medium according to one of the claims 1 to 5, wherein

the layer (A) consists of non-impregnated activated carbon and a means for stabilizing the layer;

the layer (B) consists of a solid base material and a means for stabilizing the layer impregnated with a permanganate salt;

the layer (C) consists of basically impregnated activated carbon and a means for stabilizing the layer.

7. Filter medium according to one of the claims 1 to 6, wherein the solid base material of the layer (B) is selected from aluminum oxide ($Al_2O_3$), silica gel ($SiO_2$), zirconium oxide ($ZrO_2$), titanium oxide ($TiO_2$), zeolite, kaolin, clay, bauxite, and a combination thereof; and/or wherein the permanganate salt impregnating the base material of the layer (B) is selected from sodium permanganate ($NaMnO_4$), potassium permanganate ($KMnO_4$), and a combination thereof.

8. Filter medium according to one of the claims 1 to 7, wherein the activated carbon of layer (A) and/or the basically impregnated activated carbon in layer (C) feature a BET surface area of 300-1500 $m^2/g$, in particular 500-1500 $m^2/g$.

9. Filter medium according to one of the claims 1 to 8, wherein the base impregnating the activated carbon of layer (C) is selected from potassium hydroxide (KOH), sodium hydroxide (NaOH), potassium carbonate ($K_2CO_3$), sodium carbonate ($Na_2CO_3$), and a combination thereof; and/or wherein the basically impregnated activated carbon of layer (C) features a degree of impregnation of 1 to 30 wt.-%, preferably 5 to 20 wt.-%, more preferably 10 to 15 wt.-%.

10. Filter medium body comprising a filter medium according to one of the claims 1 to 9, and at least one sideband and/or at least one headband.

11. Filter element comprising (i) a filter medium body according to claim 10 or a filter medium according to one of the claims 1 to 9, and (ii) a frame, at least one holding element, and/or at least one seal.

12. Air filter comprising a housing and a filter element according to claim 11, a filter medium body according to claim 10, or a filter medium according to one of the claims 1 to 9.

13. Method of manufacturing a filter medium comprising three layers (A) to (C) according to one of the claims 1 to 9, comprising the steps of:

> (i) applying a layer (A) comprising activated carbon;
> (ii) applying a layer (B) comprising a solid base material impregnated with a permanganate salt;
> (iii) applying a layer (C) comprising a basically impregnated activated carbon, if the layer (A) is disposed in such a way that a gas flowing through the filter medium passes through the layer (A) before the layer (B);
> or comprising the steps:
>
> > (i) applying a layer (B) comprising a solid base material impregnated with a permanganate salt;
> > (ii) applying a layer (C) comprising a basically impregnated activated carbon,
> > (iii) applying a layer (A) comprising activated carbon,
>
> if the layer (A) is disposed in such a way that a gas flowing through the filter medium passes through the layer (A) after the layer (C);
> so that
> the layers (B) and (C) are disposed in such a way that a gas flowing through the filter medium flows through the layer (B) before the layer (C),
> the layer (A) is disposed in such a way that a gas flowing through the filter medium flows through the layer (A) before the layer (B) or through the layer (A) after the layer (C).

14. Method for manufacturing a filter medium according to claim 13, wherein each of the layers (A) to (C) features a different composition.

15. Use of a filter medium according to one of the claims 1 to 9, of a filter medium body according to claim 10, of a filter element according to claim 11 or of an air filter according to claim 12 in a device for purifying ambient air, wherein the device is preferably an air conditioning system, a ventilation system, a venting system or a fuel cell, in particular a fuel cell air filter, in particular a fuel cell cathode air filter.

**Revendications**

1. Milieu filtrant comprenant trois couches (A) à (C),

   la couche (A) comprenant du charbon actif non imprégné,
   la couche (B) comprenant un matériau de base solide imprégné d'un sel permanganate, et
   la couche (C) comprenant du charbon actif imprégné de manière basique,
   les couches (B) et (C) étant disposées de telle manière qu'un gaz parcourant le milieu filtrant traverse la couche (B) avant la couche (C), et
   la couche (A) étant disposée de telle manière qu'un gaz parcourant le milieu filtrant traverse la couche (A) avant la couche (B) ou traverse la couche (A) après la couche (C).

2. Milieu filtrant selon la revendication 1, chacune des couches (A) à (C) présentant une composition différente.

3. Milieu filtrant selon la revendication 1 ou la revendication 2, une couche, deux couches ou chacune des couches individuelles (A) à (C) comprenant un moyen de stabilisation de la couche, le moyen de stabilisation de la couche pouvant être identique ou différent lorsque deux couches ou plus parmi les couches (A) à (C) comprennent un moyen de stabilisation.

4. Milieu filtrant selon l'une des revendications 1 à 3, le moyen de stabilisation de la couche étant respectivement sélectionné parmi un adhésif, une couche de support, de préférence une couche de support textile, notamment un non-tissé, et une combinaison de ces éléments, le non-tissé étant de préférence composé de fibres polymères, le polymère étant sélectionné parmi du polyuréthane, du polyester, du polypropylène, du polyéthylène, du polyamide, du polyacrylonitrile, du polycarbonate et des combinaisons de ces éléments.

5. Milieu filtrant selon l'une des revendications 1 à 4,

   la couche (A) comprenant du charbon actif, mais ne comprenant pas de matériau de base imprégné de sel permanganate ni de charbon actif imprégné de manière basique ;
   la couche (B) comprenant un matériau de base solide imprégné de sel permanganate, mais ne comprenant pas de charbon actif non imprégné ni de charbon actif imprégné de manière basique ;
   la couche (C) comprenant du charbon actif imprégné de manière basique, mais ne comprenant pas de matériau de base imprégné de sel permanganate ni de charbon actif non imprégné.

6. Milieu filtrant selon l'une des revendications 1 à 5,

   la couche (A) étant constituée de charbon actif non imprégné et d'un moyen de stabilisation de la couche ;
   la couche (B) étant constituée d'un matériau de base solide et d'un moyen de stabilisation de la couche imprégné de sel permanganate ;
   la couche (C) étant constituée de charbon actif imprégné de manière basique et d'un moyen de stabilisation de la couche.

7. Milieu filtrant selon l'une des revendications 1 à 6, le matériau de base solide de la couche (B) étant sélectionné parmi de l'oxyde d'aluminium ($Al_2O_3$), du gel de silice ($SiO_2$), de l'oxyde de zirconium ($ZrO_2$), de l'oxyde de titane ($TiO_2$), de la zéolithe, du kaolin, de l'argile, de la bauxite et une combinaison de ces éléments ; et/ou le sel permanganate dont est imprégné le matériau de base solide de la couche (B) étant sélectionné parmi du permanganate de sodium ($NaMnO_4$), du permanganate de potassium ($KMnO_4$), et une combinaison de ces éléments.

8. Milieu filtrant selon l'une des revendications 1 à 7, le charbon actif de la couche (A) et/ou le charbon actif imprégné de manière basique de la couche (C) présentant une surface BET de 300 à 1500 $m^2$/g, notamment de 500 à 1500 $m^2$/g.

9. Milieu filtrant selon l'une des revendications 1 à 8, la base dont est imprégnée le charbon actif de la couche (C) étant sélectionnée parmi de l'hydroxyde de potassium (KOH), de l'hydroxyde de sodium (NaOH), du carbonate de potassium ($K_2CO_3$), du carbonate de sodium ($Na_2CO_3$) et une combinaison de ces éléments ; et/ou le charbon actif imprégné de manière basique de la couche (C) présentant un degré d'imprégnation de 1 à 30 % en poids, de préférence de 5 à 20 % en poids, de préférence encore de 10 à 15 % en poids.

10. Corps de milieu filtrant, comprenant un milieu filtrant selon l'une des revendications 1 à 9, et au moins une bande latérale et/ou au moins une bande frontale.

11. Élément filtrant comprenant (i) un corps de milieu filtrant selon la revendication 10 ou un milieu filtrant selon l'une des revendications 1 à 9, et (ii) un cadre, au moins un élément de retenue et/ou au moins un joint d'étanchéité.

12. Filtre à air comprenant un boîtier et un élément filtrant selon la revendication 11, un corps de milieu filtrant selon la revendication 10 ou un milieu filtrant selon l'une des revendications 1 à 9.

13. Procédé de fabrication d'un milieu filtrant comprenant trois couches (A) à (C) selon l'une des revendications 1 à 9, comprenant les étapes :

(i) application d'une couche (A) comprenant du charbon actif ;
(ii) application d'une couche (B) comprenant un matériau de base solide imprégné d'un sel permanganate ;
(iii) application d'une couche (C) comprenant un charbon actif imprégné de manière basique,
lorsque la couche (A) est disposée de telle manière qu'un gaz parcourant le milieu filtrant traverse la couche (A) avant la couche (B) ;
ou comprenant les étapes :

(i) application d'une couche (B) comprenant un matériau de base solide imprégné d'un sel permanganate ;
(ii) application d'une couche (C) comprenant un charbon actif imprégné de manière basique,
(iii) application d'une couche (A) comprenant du charbon actif,

lorsque la couche (A) est disposée de telle manière qu'un gaz parcourant le milieu filtrant traverse la couche (A) après la couche (C) ;
de sorte que
les couches (B) et (C) soient disposées de telle manière qu'un gaz parcourant le milieu filtrant traverse la couche (B) avant la couche (C),
la couche (A) soit disposée de telle manière qu'un gaz parcourant le milieu filtrant traverse la couche (A) avant la couche (B) ou traverse la couche (A) après la couche (C).

14. Procédé de fabrication d'un milieu filtrant selon la revendication 13, chacune des couches (A) à (C) présentant une composition différente.

15. Utilisation d'un milieu filtrant selon l'une des revendications 1 à 9, d'un corps de milieu filtrant selon la revendication 10, d'un élément filtrant selon la revendication 11 ou d'un filtre à air selon la revendication 12 dans un dispositif de purification de l'air ambiant, le dispositif étant de préférence une installation de climatisation, une installation d'aération, un système de ventilation ou une pile à combustible, notamment un filtre à air de pile à combustible, notamment un filtre à air cathodique de pile à combustible.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 17216611 A1
- DE 102018114351 A1
- US 5772738 A
- US 20150314262 A1